# EUROPÄISCHE PATENTSCHRIFT

(11) **EP 1 059 576 B1**
(45) Veröffentlichungstag und Bekanntmachung des Hinweises auf die Patenterteilung: **19.02.2003**
(21) Anmeldenummer: 00106683.6
(22) Anmeldetag: 29.03.2000
(51) Int. Cl.: G05B 19/042

(54) **Sicherheitsschalteranordnung mit zwei Aktoren**
Safety switch installation with two actuators
Appareillage de commutation de sécurité avec deux actionneurs

(30) Priorität: 04.06.1999 DE 1992552
(43) Veröffentlichungstag der Anmeldung: 13.12.2000
(73) Patentinhaber: Leuze electronic GmbH + Co., D-73277 Owen (DE); Siemens Aktiengesellschaft, 80333 München (DE)
(72) Erfinder: Müller, Bernhard, Dr., 71083 Herrenberg (DE); Wiesgickl, Bernhard, 92249 Vilseck (DE); Schiffmann, Michael, 92224 Amberg (DE)
(74) Vertreter: Ruckh, Rainer Gerhard, Dr.

(56) Entgegenhaltungen:
- DE-A- 19 815 150
- US-A- 5 680 131

## Beschreibung

Die Erfindung betrifft eine Sicherheitsschalteranordnung gemäß dem Oberbegriff des Anspruchs 1.

Eine derartige Sicherheitsschalteranordnung ist aus der DE 198 15 150 A1 bekannt. Dort ist zur Überwachung eines Arbeitsgeräts eine Anordnung von Sensoren vorgesehen, wobei das Arbeitsgerät in Abhängigkeit der Schaltzustände der Sensoren in Betrieb gesetzt wird. Die Sensoren bilden Slaves eines nach dem Master-Slave-Prinzip arbeitenden Bussystems. Der Master ist von einer Steuereinheit gebildet, welcher die Slaves unter vorgegebenen Adressen zyklisch abfragt.

Die Sensoren sind von Lichtschranken mit jeweils einem Sender und einem Empfänger gebildet, wobei jeder Sender Sendelichtstrahlen mit einer individuellen Kodierung an den zugeordneten Empfänger aussendet. An das Bussystem ist eine redundante Auswerteeinheit angeschlossen, welche fortlaufend die über das Bussystem übertragenen Signale abhört. Nur bei fehlerfreier Identifizierung der von den Empfängern über das Bussystem übertragenen Kodierungen wird das Arbeitsgerät über die Auswerteeinheit in Betrieb gesetzt.

Vorteilhaft bei dieser Anordnung ist, daß durch Auswertung der Kodierungen in der Auswerteeinheit Übertragungsfehler bei der Übertragung von Signalen über das Bussystem mit großer Sicherheit aufgedeckt werden können.

Dabei brauchen die Sensoren in vorteilhafterweise nicht redundant aufgebaut sein um dennoch die Übertragung der Signale auf dem Bussystem mit dem für den Einsatz der Anordnung im Bereich des Personenschutzes erforderlichen Sicherheitsniveau überprüfen zu können.

Prinzipiell ist es dabei auch möglich anstelle von Sensoren auch Aktoren wie zum Beispiel Notausschalter als Slaves an das Bussystem anzuschalten. Derartige Notausschalter sind aus Sicherheitsgründen zweikanalig aufgebaut. Jeder Notausschalter weist somit zwei Kontakte auf, welche bei Betätigen des Notausschalters geöffnet werden. Der Zustand eines nicht betätigten Notausschalters entspricht dem störungsfreien Betrieb. In diesem Betriebszustand werden analog zu einer Lichtschranke bei freiem Strahlengang die Kodierungen zur Auswerteeinheit übertragen. Diese Kodierungen können beispielsweise in Form eines 4-bit breiten Zahlenworts übertragen werden, dessen Wert sich nach einem bestimmten Ablauf fortlaufend ändert. Wird der Notausschalter betätigt, so entspricht dies einem Störfall analog einem Objekteingriff in den Strahlengang einer Lichtschranke. In diesem Fall wird vom Notausschalter ein fester, von den Kodierungen verschiedener Wert des Zahlenworts an die Auswerteeinheit übertragen, so daß das Arbeitsgerät außer Betrieb gesetzt wird. Der Wert des Zahlenworts beträgt für ein 4-bit Zahlenwort beispielsweise "0000".

Um das Arbeitsgerät außer Betrieb zu setzen, reicht es aus, einen Kontakt des Notausschalters zu öffnen. Jedoch bleibt in diesem Fall ein eventueller Defekt des zweiten Kontakts des Notausschalters unerkannt. Fällt dann auch der zweite Kontakt des Notausschalters aus, so kann dies zu einer Gefährdung des Bedienpersonals des Arbeitsgerätes führen, da über den Notausschalter das Arbeitsgerät nicht mehr abschaltbar ist.

Der Erfindung liegt die Aufgabe zugrunde eine Sicherheitsschalteranordnung der eingangs genannten Art so auszubilden, daß ein Inbetriebsetzen des Arbeitsgerätes bei fehlerhaften Sicherheitsschaltern vermieden wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Erfindungsgemäß weist die Sicherheitsschalteranordnung zum Ein- und Ausschaltern der Stromversorgung eines Arbeitsgerätes wenigstens zwei Aktoren auf, wobei die Stromversorgung nur bei gleichzeitig aktivierten Aktoren eingeschaltet ist.

Die Aktoren sind an einen Codegenerator angeschlossen. Von diesem Codegenerator ist ein Zahlenwort ausgebbar, welches in zwei Teilworte unterteilt ist. Dabei ist der Wert eines Teilworts von jeweils einem der Aktoren beeinflußbar. Zur Überprüfung der Schaltzustände des Aktoren werden die Teilworte des Zahlenwortes synchron in eine Auswerteeinheit eingelesen.

Bei aktivierten Aktoren werden die Werte der Teilwort jeweils fortlaufend geändert. Dies wird in der Auswerteeinheit registriert, worauf das Arbeitsgerät in Betrieb gesetzt wird.

Sobald einer der Aktoren deaktiviert wird, nimmt das zugeordnete Teilwort einen festen Wert ein. Nur noch die Werte des Teilwortes, welches dem noch aktivierten Aktor zugeordnet ist, ändern sich noch.

Entsprechend nehmen beide Teilworte einen festen Wert ein, wenn beide Aktoren deaktiviert sind.

Durch Auswertung der Werte der beiden Teilworte kann somit auf einfache Weise überprüft werden, welcher der Aktoren zu bestimmten Zeitpunkten aktiviert ist.

Eine Freigabe für das Inbetriebsetzen des Arbeitsgerätes erfolgt dabei nur dann, wenn beide Aktoren aktiviert sind. Sobald wenigstens einer der Aktoren deaktiviert ist, wird dies in der Auswerteeinheit durch den zeitlich unveränderten Wert der Teilfolge registriert, worauf das Arbeitsgerät außer Betrieb gesetzt wird.

Mit der erfindungsgemäßen Sicherheitsschalteranordnung wird somit jeder Aktor durch die Aufspaltung des Zahlenwortes in Teilworte über den Codegenerator separat überwacht, wodurch eine hohe Fehlersicherheit gewährleistet ist.

Dabei können die beiden Aktoren insbesondere auch von redundant ausgebildeten Schaltausgängen von Lichtschranken, Lichtgittern und ähnlichen Sensoreinrichtungen, die im Bereich des Personenschutzes eingesetzt werden, gebildet sein. Insbesondere können die beiden Aktoren von redundant aufgebauten Kontakten eines Notausschalters gebildet sein.

Bei derartigen Anwendungen, insbesondere bei Notausschaltern, können durch Leitungsdefekte Fehlfunktionen auftreten, so daß einzelne Aktoren nicht mehr deaktivierbar sind. Dies kann bei Notausschaltern durch einen Kurzschluß der Zuleitungen zu einem Kontakt des Notausschalters verursacht sein. Tritt dieser Fehler bei oder nach Betätigen des Notausschalters auf, so werden zunächst beide Kontakte des Notausschalters geöffnet. Aufgrund des Kurzschlusses in den Zuleitungen läuft das entsprechende Teilwort weiter, während das andere Teilwort auf einem festen Wert gehalten wird. Dadurch weicht der Wert des Zahlenworts von einem vorgegebenen Wert ab, wodurch das Arbeitsgerät außer Betrieb gesetzt wird. Soll nach einer vorgegebenen Zeit das Arbeitsgerät wieder freigegeben werden, wird vom Bedienpersonal der Notausschalter aktiviert und damit freigegeben. Da in einer Zuleitung zu einem der Kontakt des Notausschalters ein Kurzschluß vorliegt, hatte sich vor der Aktivierung des Notausschalters der Wert des Teilwortes, welches den Zuleitungen mit dem Kurzschluß zugeordnet war, bereits fortlaufend geändert, was in der Auswerteeinheit erkannt wird. Damit wird ein Wiedereinschalten verhindert und eine Störmeldung ausgegeben, obwohl sich durch Aktivieren des Notausschalters die Werte beider Teilworte ändern, was gleich einem fehlerfreien Betrieb ist. Ein Wiedereinschalten ist nur dann möglich, wenn zuvor beide Teilworte den festen Wert "0000" angenommen haben.

Prinzipiell kann in der Auswerteeinheit auch ein auftretender Fehler nichtflüchtig gespeichert werden. Ein Wiedereinschalten des Arbeitsgerätes, beispielsweise nach einer Reparatur, ist in diesem Fall nur nach einem Anlauftest möglich, in welchem zunächst der Notausschalter nicht betätigt, dann betätigt und schließlich wieder nicht betätigt ist. Nur wenn dabei die Werte der Teilworte jeweils den vorgegebenen Werten entsprechen, wird das Arbeitsgerät eingeschaltet.

Die Erfindung wird im nachstehenden anhand der Zeichnungen erläutert. Es zeigen:
- Figur 1:: Blockschaltbild von an ein Sensor-Aktor-Bussystem angeschlossenen Sicherheitsschalteranordnungen.
- Figur 2:: Blockschaltbild eines ersten Ausführungsbeispiels einer Sicherheitsschalteranordnung gemäß Figur 1.
- Figur 3:: Blockschaltbild eines zweiten Ausführungsbeispiels einer Sicherheitsschalteranordnung gemäß Figur 1.

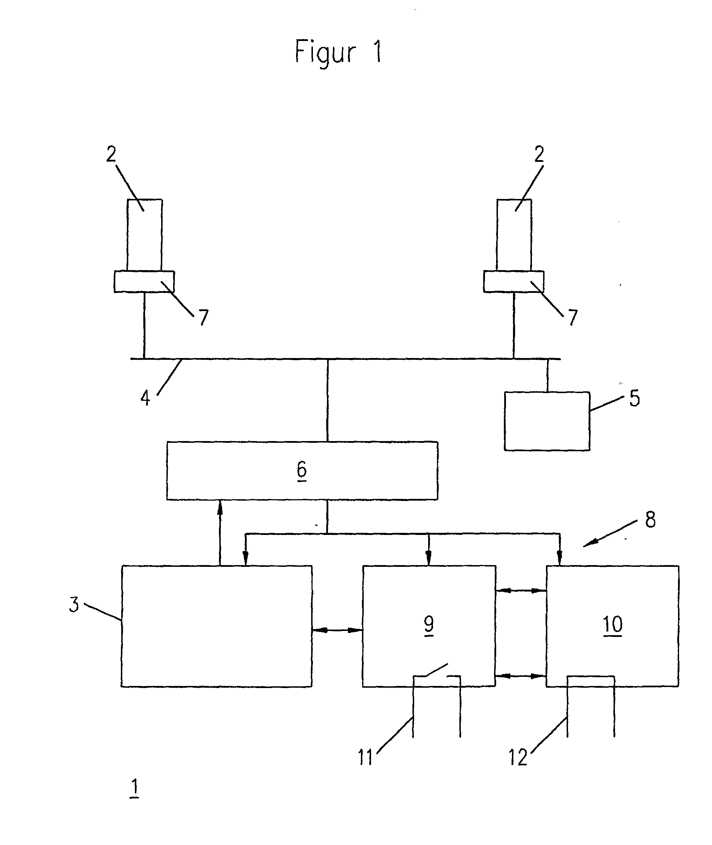

Figur 1 zeigt ein nach dem Master-Slave-Prinzip arbeitendes Bussystem 1. An dieses Bussystem 1 sind Sicherheitsschalteranordnungen 2 angeschlossen, welche jeweils zwei Aktoren aufweisen. Vorzugsweise sind diese Sicherheitsschalteranordnungen 2 Bestandteil von redundant aufgebauten Einrichtungen zum Einsatz im Bereich des Personenschutzes.

Die Sicherheitsschalteranordnungen 2 bilden die Slaves des Bussystems 1. Das Bussystem 1 wird vom Master, der von einer Steuereinheit 3, beispielsweise einer SPS-Steuerung, gebildet ist, zentral gesteuert. Der Master und die Slaves sind über Busleitungen 4 miteinander verbunden. Die Stromversorgung erfolgt über ein Netzteil 5.

Der Master fragt die einzelnen Slaves unter vorgegebenen Adressen zyklisch ab, woraufjeder Slave ein Antwort an den Master sendet.

Im vorliegenden Fall ist das Bussystem 1 vom ASi-Bussystem gebildet. Das ASi-Bussystem ist insbesondere für den Anschluß von binären Sensoren und Aktoren konzipiert. Die Funktionsweise des ASi-Bussystem ist in "ASI - Das Aktuator Sensor Interface für die Automation", Werner Kriesel, Otto W. Madelung, Carl Hanser Verlag, 1994 beschreiben, dessen Inhalt in den Offenbarungsgehalt dieser Anmeldung miteinbezogen wird.

Bei diesem Bussystem 1 besteht ein Masteraufruf aus einem Startbit, einer 5 Bit-breiten Adresse, 2 Bit Steuerinformation, 4 Bit Nutzdaten sowie jeweils einem Paritäts- und Stopp-Bit. Die zugehörige Slaveantwort enthält ein Start-Bit, 4 Bit Nutzdaten sowie jeweils ein Paritäts- und Stopp-Bit. Ein Slave überprüft den empfangenen Masteraufruf anhand vorgegebener ASi-spezifischer Kodierungsregeln. Erkennt der Slave einen gültigen Masteraufruf, so sendet er eine entsprechende Antwort. In allen anderen Fällen antwortet er nicht. Ebenso verwirft der Master eine Slaveantwort, wenn sie den entsprechenden Kodierungsregeln nicht entspricht.

Die Daten sind Manchester-kodiert und werden als alternierende, sin²-förmige Spannungsimpulse über die Busleitungen 4 übertragen.

Hierzu ist dem Master eine Analogschaltung 6 nachgeordnet, welche ein jeweils nicht dargestelltes Sendeelement und ein Empfangselement aufweist. Im Sendeelement werden die binären Daten eines Masteraufrufs in eine Folge von sin²-förmigen Spannungsimpulse umgewandelt. Diese Signale werden über die Busleitungen 4 an die Slaves gesendet. Die von den Slaves über die Busleitungen 4 an den Master gesendeten Signale werden in dem Empfangselement in binäre Datenfolgen umgewandelt.

Jedem Slave ist ein Schnittstellenbaustein 7 zugeordnet, der in dem vorliegenden Beispiel von einem ASi-IC gebildet ist. Im Schnittstellenbaustein 7 werden die über die Busleitung 4 empfangenen Folgen von sin²-förmigen Spannungsimpulsen in binäre Daten gewandelt. Desweiteren wird im Schnittstellenbaustein 7 die in Form von binären Daten vorliegende Slaveantwort in eine Folge von sin²-förmigen Spannungsimpulsen und über die Busleitungen 4 an den Master gesendet.

Zur Überprüfung der über die Busleitungen 4 gesendeten Signale ist eine redundante Auswerteeinheit 8 mit zwei sich überwachenden Rechnereinheiten 9, 10 an das Bussystem 1 angeschlossen. Die Rechnereinheiten 9, 10 sind vorzugsweise von identisch aufgebauten Mikroprozessoren gebildet. Die Auswerteeinheit 8 bildet weder einen Master noch einen Slave sondern stellt einen rein passiven Busteilnehmer dar, der fortlaufend die auf den Busleitungen 4 übertragenen Signale abhört. Hierzu ist die Auswerteeinheit 8 an die Analogschaltung 6 angeschlossen. Die Signale des Empfangselements werden in die Rechnereinheiten 9, 10 der Auswerteeinheit 8 eingelesen und dort zyklisch miteinander verglichen.

Jede Rechnereinheit 9, 10 weist einen Ausgang 11, 12 auf, welcher an das Arbeitsgerät angeschlossen ist. Die Ausgänge 11, 12 sind als Relaisausgänge oder sichere sich selbst überwachende Halbleiterausgänge ausgebildet. Über diese Ausgänge 11, 12 erfolgt die Inbetriebsetzung des Arbeitsgeräts.

Die an das Bussystem 1 angeschlossenen Sicherheitsschalteranordnungen 2 können beispielsweise von zwei oder mehreren Aktoren bildenden Türschaltern gebildet sein, welche den Öffnungszustand einer Türe überwachen, welche zur Kontrolle des Zugangs zum Arbeitsgerät vorgesehen ist.

Alternativ können die Sicherheitsschalteranordnungen 2 Lichtschranken, Lichtgitter und dergleichen bilden, welche zur Überwachung des Vorfelds von Maschinen, welche die Arbeitsgeräte bilden, dienen. Derartige Lichtgitter und

Lichtschranken weisen zur Erfüllung der Sicherheitanforderungen im Bereich des Personenschutzes einen zweikanaligen Aufbau auf. Insbesondere werden die die Ausgangssignale bildenden Schaltzustände über einen zweikanaligen Ausgang ausgegeben, wobei jeder Ausgang einen Aktor aufweist. Die Aktoren können beispielsweise als Relais ausgebildet sein.

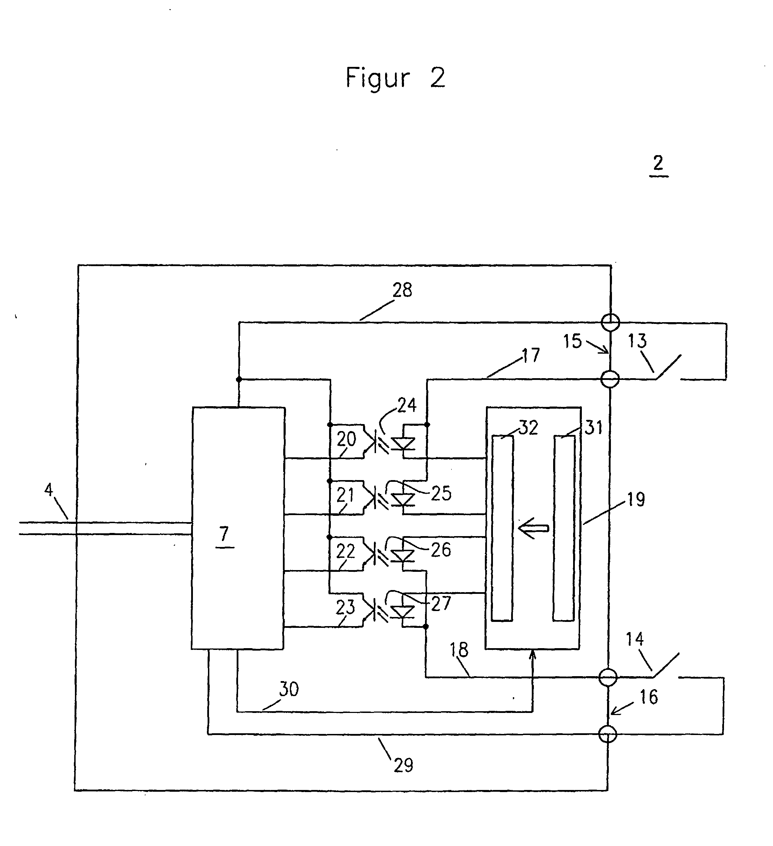

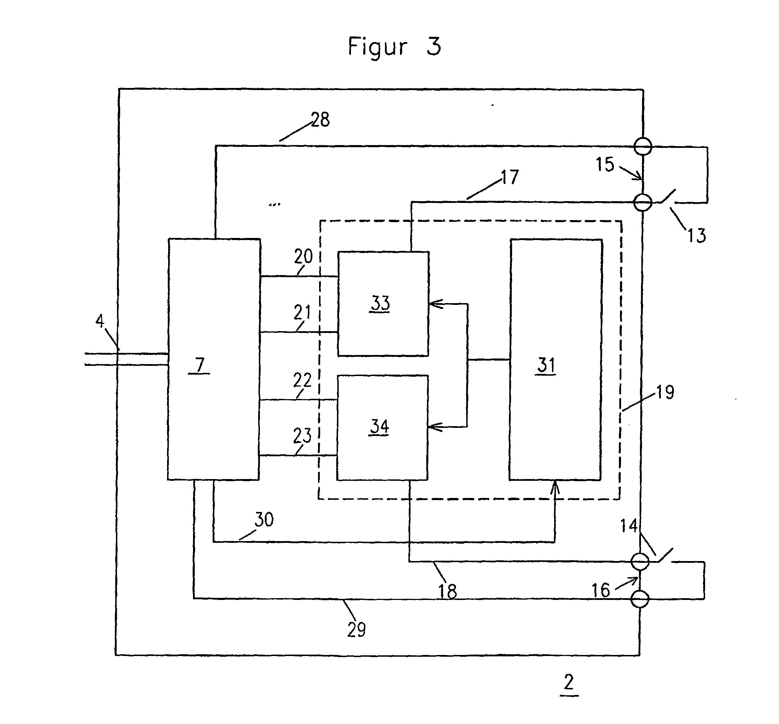

Die Figuren 2 und 3 zeigen Ausführungsbeispiele, bei welchen die Sicherheitsschalteranordnung 2 einen zweikanaligen Notausschalter umfaßt. Die Sicherheitsschalteranordnung 2 mit dem Notausschalter ist über einen Schnittstellenbaustein 7 an das Bussystem 1 angeschlossen.

Der in Figur 2 dargestellte Notausschalter weist zwei Kontakte mit jeweils einem einen Aktor bildenden Schalter 13, 14 und einen Anschluß 15, 16 auf, wobei von den Anschlüssen 15, 16 jeweils eine Zuleitung 17, 18 auf die Ausgänge eines Codegenerators 19 geführt ist.

Der Codegenerator 19 ist beispielsweise auf einem Micorcontroller integriert und generiert ein Zahlenwort, welches im vorliegenden Ausführungsbeispiel als 4 bit-breites binäres Zahlenwort ausgebildet ist. Die Bits dieses Zahlenworts werden jeweils über eine separate Signalleitung 20 - 23 in einen Eingang D0-D3 des Schnittstellenbausteins 7 eingelesen. Von dort wird das Zahlenwort über die Busleitungen 4 zu der Auswerteeinheit 8 übertragen. Zur galvanischen Trennung von Schnittstellenbaustein 7 und Codegenerator 19 ist in jeder Signalleitung 20 - 23 ein Optokoppler 24 - 27 vorgesehen.

Das Zahlenwort ist in zwei Teilworte untergliedert. Die ersten beiden Bits des Zahlenworts werden vom Codegenerator 19 über die Eingänge D0 und D1 in den Schnittstellenbaustein 7 eingelesen und bilden das erste Teilwort. Die beiden letzten Bits des Zahlenworts werden vom Codegenerator 19 über die Eingänge D2 und D3 in den Schnittstellenbaustein 7 eingelesen und bilden das zweite Teilwort.

Jeweils eine Zuleitung 28, 29 ist vom Anschluß des Notausschalters direkt zum Schnittstellenbaustein 7 geführt. Diese Zuleitungen liefern die positive bzw. negative Versorgungsspannung für die Optokoppler 24-27. Zudem wird zur Taktung der Signalübertragung zwischen Codegenerator 19 und Schnittstellenbaustein 7 über eine weitere Zuleitung 30 ein Data-Strobe-Signal vom Schnittstellenbaustein 7 zum Codegenerator 19 übertragen.

Die Zuleitung 17 mit dem ersten Schalter 13 des Notausschalters ist auf die an die Eingänge D0 und D1 des Schnittstellenbausteins 7 angeschlossenen Optokoppler 24, 25 geführt. Entsprechend ist die Zuleitung 18 mit dem zweiten Schalter 14 auf die anderen Optokoppler 26, 27 an den Eingängen D2 und D3 des Schnittstellenbausteins 7 geführt. Der Wert des ersten Teilworts ist somit über die Zuleitung 17 vom ersten Schalter 13 des Notausschalters beeinflußbar. Der Wert des zweiten Teilworts ist entsprechend über die Zuleitung 18 vom zweiten Schalter 14 des Notausschalters beeinflußbar.

Der Codegenerator 19 weist einen Pseudo-Zufallsgenerator auf, mit welchem der Wert des vom Codegenerator 19 ausgegebenen Zahlenworts fortlaufend geändert wird.

Im vorliegenden Ausführungsbeispiel weist der Pseudo-Zufallsgenerator einen Zähler 31 und eine Codetabelle 32 auf. In der Codetabelle 32 sind unter unterschiedlichen Adressen verschiedene Werte des Zahlenworts abgelegt. Im vorliegenden Ausführungsbeispiel umfaßt die Codetabelle 32 insgesamt vierzehn verschiedene Werte, welche im Bereich vom "0001" bis "1110" liegen. Der Zähler 31 ist als modulo-8-Zähler ausgebildet und nimmt Zählerstände im Bereich von 0 bis 7 an, wobei die einzelnen Zählerstände Adressen bilden, unter welchen die einzelnen Werte in der Codetabelle 19 hinterlegt sind. Je nachdem welche Adresse durch den Zähler 31 generiert wird, wird der entsprechende Wert aus der Codetabelle 32 ausgelesen und als Zahlenwort über die Signalleitungen 20 - 23 in den Schnittstellenbaustein 7 eingelesen. Durch das laufende Hochzählen des Zählers 31 werden die Adressen fortlaufend geändert, so daß auch die Werte des Zahlenworts fortlaufend geändert werden.

Solange der Notausschalter nicht betätigt wird, sind die Schalter 13, 14 geöffnet was der Aktivierung dieser Aktoren entspricht. Dann werden die sich fortlaufend ändernden Werte des Zahlenworts vom Codegenerator 19 in den Schnittstellenbaustein 7 eingelesen und von dort über die Busleitungen 4 der Auswerteeinheit 8 zugeführt. Vorteilhaft hierbei ist, daß die Wortbreite des Zahlenworts der Wortbreite der über das Bussystem 1 übertragenen Nutzdaten entspricht. In der Auswerteeinheit 8 wird der sich fortlaufend ändernde Wert des Zahlenworts registriert, so daß über die Auswerteeinheit 8 das angeschlossene Arbeitsgerät in Betrieb gesetzt wird.

Wird einer der beiden Schalter 13 oder 14 geöffnet, so wird die Übertragung des entsprechenden Teilworts auf den Signalleitungen 20, 21 oder 22, 23 unterbrochen. Somit wird anstelle des durch den Codegenerator 19 generierten, sich ändernden Teilworts über die Signalleitungen 20, 21 oder 22, 23 der zeitlich konstante Wert 00 oder 11 über die Eingänge D0 und D1 bzw. D2 und D3 in den Schnittstellenbaustein 7 eingelesen.

Die Teilworte werden als Zahlenwort synchron von dem Schnittstellenbaustein 7 in die Auswerteeinheit 8 eingelesen. Vorzugsweise sind dort die Werte des vom Codegenerator generierten Zahlenworts als Sollwerte abgespeichert.

Ist einer der Schalter 13 oder 14 geöffnet, so wird in der Auswerteeinheit 8 registriert, daß sich das diesem Schalter 13 oder 14 zugeordnete Teilwort nicht mehr ändert. Daraufhin setzt die Auswerteeinheit 8 das Arbeitsgerät außer Betrieb, da eine Betätigung des Notausschalters oder eine Störung in der Sicherheitsschalteranordnung 2 vorliegt.

Auch für den Fall, daß beide Schalter 13 und 14 betätigt sind, wird über die Auswerteeinheit 8 das Arbeitsgerät außer Betrieb gesetzt, da in diesem Fall beide Teilworte des Zahlenworts einen konstanten Wert annehmen, der von den im Codegenerator 19 generierten Werten des Zahlenworts abweicht.

Ein Wiedereinschalten des Arbeitsgerätes erfolgt nur dann, wenn bei angeschaltetem Arbeitsgerät zuvor beide Teilworte den festen Wert "00" eingenommen haben, was einem Öffnen beider Schalter 13 und 14 entspricht. Ändert sich bei ausgeschaltetem Arbeitsgerät noch eines der Teilworte so liegt beispielsweise ein Kurzschluß zwischen den Leitungen 17, 28 oder 18, 29 des entsprechenden Schalters 13 oder 14 vor, sodaß ein Einschalten des Arbeitsgerätes unterbunden wird, obwohl bei nicht betätigtem Notausschalter sich dann wieder die Werte beider Teilworte ändern.

In Figur 3 ist eine Abwandlung des Ausführungsbeispiels gemäß Figur 2 dargestellt. Der Aufbau des Ausführungsbeispiels gemäß Figur 3 entspricht dabei im wesentlichen dem Aufbau des Ausführungsbeispiels gemäß Figur 2,

Im Unterschied zum Ausführungsbeispiel gemäß Figur 2 weist die Anordnung gemäß Figur 3 einen Pseudo-Zufallsgenerator auf, der einen Zähler 31 und zwei Codetabellen 33, 34 aufweist. In jeder der beiden Codetabellen 33, 34 sind jeweils die Werte der einzelnen Teilworte unter Adressen abgelegt, wobei sich die Adressen beider Codetabellen 33, 34 entsprechen. Der Zähler 31 generiert wiederum fortlaufend Adressen, unter welchen die Werte beider Teilworte synchron aus den beiden Codetabellen 33, 34 abgerufen werden. Dann werden die sich zum Wert des Zahlenworts ergänzenden Werte der Teilworte synchron über die Signalleitungen 20 - 23 in den Schnittstellenbaustein 7 eingelesen.

## Patentansprüche

1. Sicherheitsschalteranordnung zum Ein- und Ausschalten der Stromversorgung eines Arbeitsgerätes mittels wenigstens zweier Aktoren, wobei die Stromversorgung nur bei gleichzeitig aktivierten Aktoren eingeschaltet ist, **dadurch gekennzeichnet, daß** die Aktoren an einen Codegenerator (19) angeschlossen sind, daß vom Codegenerator (19) ein Zahlenwort ausgebbar ist, welches in zwei Teilworte unterteilt ist, und jeweils der Wert eines Teilworts von jeweils einem Aktor beeinflußbar ist, wobei bei aktvierten Aktoren die Werte der Teilworte jeweils fortlaufend geändert werden und wobei infolge der Deaktivierung eines Aktors das zugeordnete Teilwort einen fest vorgegebenen Wert einnimmt, und daß zur Überprüfung der Schaltzustände der Aktoren die Teilworte synchron in eine Auswerteeinheit (8) eingelesen werden.

2. Sicherheitsschalteranordnung nach Anspruch 1, **dadurch gekennzeichnet, daß** der Zugang zum Arbeitsgerät mittels einer Türe abgesichert ist, welche mittels zweier als Türschalter ausgebildeter Aktoren überwacht wird.

3. Sicherheitsschalteranordnung nach Anspruch 1, **dadurch gekennzeichnet, daß** das Arbeitsgerät von einer Maschine gebildet ist, deren Vorfeld mittels eines Lichtgitters überwacht wird, welches einen zweikanaligen Ausgang mit jeweils einem Aktor aufweist.

4. Sicherheitsschalteranordnung nach Anspruch 1, **dadurch gekennzeichnet, daß** die Aktoren von Schaltern (13, 14) eines zweikanaligen Notausschalters gebildet sind.

5. Sicherheitsschalteranordnung nach einem der Ansprüche 1 - 4, **dadurch gekennzeichnet, daß** der Codegenerator (19) einen Pseudo-Zufallsgenerator zur Änderung des Wertes des Zahlenwortes aufweist.

6. Sicherheitsschalteranordnung nach Anspruch 5, **dadurch gekennzeichnet, daß** der Pseudo-Zufallsgenerator einen Zähler (31) und eine Codetabelle (32) aufweist, wobei in der Codetabelle (32) unter Adressen verschiedene Werte des Zahlenwortes hinterlegt sind, und wobei der Zähler (31) nacheinander Adressen zum Abrufen der entsprechenden Werte aus der Codetabelle (32) generiert.

7. Sicherheitsschalteranordnung nach Anspruch 5, **dadurch gekennzeichnet, daß** der Pseudo-Zufallsgenerator einen Zähler (31) und zwei Codetabellen (33, 34) aufweist, wobei in jeder Codetabelle (33, 34) unter Adressen verschiedene Werte jeweils eines Teilworts hinterlegt sind, und wobei der Zähler (31) nacheinander Adressen zum synchronen Abrufen der entsprechenden Werte aus den beiden Codetabellen (33, 34) generiert.

8. Sicherheitsschalteranordnung nach einem der Ansprüche 5 - 7, **dadurch gekennzeichnet, daß** das Zahlenwort als 4-bit breites binäres Zahlwort ausgebildet ist.

9. Sicherheitsschalteranordnung nach Anspruch 8, **dadurch gekennzeichnet, daß** jedes Teilwort als 2-bit breites binäres Teilwort ausgebildet ist.

10. Sicherheitsschalteranordnung nach einem der Anspruch 8 oder 9, **dadurch gekennzeichnet, daß** jedes Bit des Zahlenworts jeweils über eine Signalleitung (20 - 23) am Ausgang des Codegenerators (19) ausgelesen wird.

11. Sicherheitsschalteranordnung nach Anspruch 8, **dadurch gekennzeichnet, daß** die Aktoren jeweils über eine Zuleitung (17, 18) an den Codegenerator (19) angeschlossen sind, über welchen der Schaltzustand des Aktors in den Codegenerator (19) eingelesen wird, und daß bei einem der Aktivierung eines Aktors entsprechenden Schaltzustand die Signalleitungen (20, 21 oder 22, 23) des zugeordneten Teilworts die Bitwerte 00 oder 11 einnehmen.

12. Sicherheitsschalteranordnung nach Anspruch 11, **dadurch gekennzeichnet, daß** in der Codetabelle (32) oder in den Codetabellen (33, 34) binäre Zufallswerte im Bereich von 0001 bis 1110 abgespeichert sind.

13. Sicherheitsschalteranordnung nach Anspruch 12, **dadurch gekennzeichnet, daß** der Zähler (31) als modulo-8-Zähler mit den die Adressen bildenden Zählerständen im Bereich von 0 bis 7 ausgebildet ist.

14. Sicherheitsschalteranordnung nach einem der Ansprüche 1 - 13, **dadurch gekennzeichnet, daß** die Auswerteeinheit (8) redundant aufgebaut ist.

15. Sicherheitsschalteranordnung nach einem der Ansprüche 1 - 14, **dadurch gekennzeichnet, daß** die Auswerteeinheit (8) an ein Bussystem (1) angeschlossen ist, welches von einer Steuereinheit (3) gesteuert ist, wobei die Auswerteeinheit (8) fortlaufend die über das Bussystem (1) übertragenen Signale abhört.

16. Sicherheitsschalteranordnung nach Anspruch 15, **dadurch gekennzeichnet, daß** die Aktoren über einen Schnittstellenbaustein (7) an das Bussystem (1) angeschlossen sind.

17. Sicherheitsschalteranordnung nach Anspruch 16, **dadurch gekennzeichnet, daß** die Signalleitungen (20 - 23) am Ausgang des Codegenerators (19) zur Übertragung der Bits des Zahlenworts auf jeweils einen Eingang D0-D3 eines Schnittstellenbausteins (7) geführt sind.

18. Sicherheitsschalteranordnung nach einem der Ansprüche 15 - 17, **dadurch gekennzeichnet, daß** das Bussystem (1) nach dem Master-Slave Prinzip arbeitet, wobei der Master von der Steuereinheit (3) gebildet ist.

19. Sicherheitsschalteranordnung nach einem der Ansprüche 4-18, **dadurch gekennzeichnet, daß** bei Ausschalten der Stromversorgung des Arbeitsgerätes infolge eines Fehlers dieser in der Auswerteeinheit (8) nichtflüchtig gespeichert wird, daß vor Einschalten der Stromversorgung des Arbeitsgerätes der Notausschalter zunächst nicht betätigt, dann betätigt und darauf wieder nicht betätigt ist, und daß das Einschalten nur dann durch die Auswerteeinheit (8) freigegeben wird, falls hierbei jeweils die entsprechenden Werte der Teilworte registriert werden.

## Claims

1. Safety switch arrangement for switching on and switching off the current supply of operating apparatus by means of at least two actuators, wherein the current supply is switched on only in the case of simultaneously activated actuators, **characterised in that** the actuators are connected with a code generator (19), that a numerical word, which is divided into two part words, can be issued by the code generator (19), and the value of each part word can be influenced by a respective one of the actuators, wherein in the case of activated actuators the values of the part words are respectively continuously changed and wherein in consequence of deactivation of an actuator the associated part word adopts a fixedly predetermined value, and that for checking the switch states of the actuators the part words are synchronously read into an evaluating unit (8).

2. Safety switch arrangement according to claim 1, **characterised in that** the access to the operating apparatus is protected by a door which is monitored by means of two actuators constructed as door switches.

3. Safety switch arrangement according to claim 1, **characterised in that** the operating apparatus is formed by a machine, the area in front of which is monitored by means of a light grating which has a two-channel output with a respective actuator.

4. Safety switch arrangement according to claim 1, **characterised in that** the actuators are formed by switches (13, 14) of a two-channel emergency off-switch.

5. Safety switch arrangement according to one of claims 1 to 4, **characterised in that** the code generator (19) comprises a pseudo-random generator for-changing the value of the numerical word.

6. Safety switch arrangement according to claim 5, **characterised in that** the pseudo-random generator comprises a counter (31) and a code table (32), wherein different values of the numerical word are filed in the code table (32) under addresses and wherein the counter (31) generates successive addresses for calling up the corresponding values from the code table (32).

7. Safety switch arrangement according to claim 5, **characterised in that** the pseudo-random generator comprises a counter (31) and two code tables (33, 34), wherein different values of a respective part word are filed in each code table (33, 34) under addresses and wherein the counter (31) generates successive addresses for synchronous calling-up of the corresponding values from the two code tables (33, 34).

8. Safety switch arrangement according to one of claims 5 to 7, **characterised in that** the numerical word is formed as a binary number word of 4 bit width.

9. Safety switch arrangement according to claim 8, **characterised in that** each part word is formed as a binary part word of 2 bit width.

10. Safety switch arrangement according to one of claims 8 and 9, **characterised in that** each bit of the numerical word is read out by way of a respective signal line (20 to 23) at the output of the code generator (19).

11. Safety switch arrangement according to claim 8, **characterised in that** the actuators are each connected by way of a respective feed line (17, 18) with the code generator (19), by way of which the switch state of the actuator is read into the code generator (19), and that in the case of a switch state corresponding with activation of an actuator the signal lines (20, 21 or 22, 23) of the associated part word adopt the bit values 00 or 11.

12. Safety switch arrangement according to claim 11, **characterised in that** binary random values in the range of 0001 to 1110 are stored in the code table (32) or in the code tables (33, 34).

13. Safety switch arrangement according to claim 12, **characterised in that** the counter (31) is constructed as a modulo-8-counter with the counter states, which form the addresses, in the range of 0 to 7.

14. Safety switch arrangement according to one of claims 1 to 13, **characterised in that** the evaluating unit (8) is constructed in redundant manner.

15. Safety switch arrangement according to one of claims 1 to 14, **characterised in that** the evaluating unit (8) is connected with a bus system (1), which is controlled by a control unit (3), wherein the evaluating unit (8) continuously monitors the signals transmitted by way of the bus system (1).

16. Safety switch arrangement according to claim 15, **characterised in that** the actuators are connected by way of an interface block (7) with the bus system (1).

17. Safety switch arrangement according to claim 16, **characterised in that** the signal lines (20 to 23) at the output of the code generator (19) for transmission of the bits of the numerical word are each led to a respective input D0 to D3 of an interface block (7).

18. Safety switch arrangement according to one of claims 15 to 17, **characterised in that** the bus system (1) operates according to the master-slave principle, wherein the master is formed by the control unit (3).

19. Safety switch arrangement according to one of claims 4 to 18, **characterised in that** in the case of switching off the current supply of the operating apparatus due to a fault this is stored in non-volatile manner in the evaluating unit (8), that before switching-on of the current supply of the operating apparatus the emergency off-switch is initially not actuated, then is actuated and thereupon is again not actuated,. and that the switching-on is released by the evaluating unit (8) only when in each instance the corresponding values of the part words are registered.

## Revendications

1. Dispositif de commutation de sécurité pour l'établissement et la coupure de l'alimentation électrique d'un équipement de travail au moyen d'au moins deux actionneurs, l'alimentation électrique n'étant connectée que si les actionneurs sont activés en même temps, **caractérisé par le fait que** les actionneurs sont raccordés à un générateur de codes (19), que le générateur de codes (19) peut délivrer un mot numérique, lequel est divisé en deux mots partiels, la valeur d'un mot partiel étant influencée par un actionneur en ce sens qu'elle change de façon continue lorsque l'actionneur est activé et que le mot partiel prend une valeur fixe prédéfinie lorsque l'actionneur auquel il est associé est désactivé, et que les mots partiels peuvent être lus de façon synchrone dans une unité d'évaluation (8) dans un but de vérification de l'état logique des actionneurs.

2. Dispositif de commutation de sécurité selon la revendication 1, **caractérisé par le fait que** l'accès à l'équipement de travail est protégé par une porte qui est surveillée au moyen de deux actionneurs prenant la forme de contacteurs de porte.

3. Dispositif de commutation de sécurité selon la revendication 1, **caractérisé par le fait que** l'équipement de travail est constitué d'une machine dont les abords sont surveillés par une barrière optique qui présente une sortie à deux canaux reliés chacun un actionneur.

4. Dispositif de commutation de sécurité selon la revendication 1, **caractérisé par le fait que** les actionneurs sont formés de commutateurs (13, 14) d'un interrupteur d'arrêt d'urgence à deux canaux.

5. Dispositif de commutation de sécurité selon l'une des revendications 1 à 4, **caractérisé par le fait que** le générateur de codes (19) présente un générateur pseudo-aléatoire pour changer la valeur du mot numérique.

6. Dispositif de commutation de sécurité selon la revendication 5, **caractérisé par le fait que** le générateur pseudo-aléatoire présente un compteur (31) et une table de codes (32) dans laquelle sont enregistrées différentes valeurs du mot numérique à des adresses, le compteur (31) générant successivement des adresses pour l'appel des valeurs correspondantes dans la table de codes (32).

7. Dispositif de commutation de sécurité selon la revendication 5, **caractérisé par le fait que** le générateur pseudo-aléatoire présente un compteur (31) et deux tables de codes (33, 34) dans chacune desquelles sont enregistrées différentes valeurs d'un mot partiel à des adresses, le compteur (31) générant successivement des adresses pour l'appel synchrone des valeurs correspondantes dans les deux tables de codes (33, 34).

8. Dispositif de commutation de sécurité selon l'une des revendications 5 à 7, **caractérisé par le fait que** le mot numérique est formé d'un mot numérique binaire de 4 bits.

9. Dispositif de commutation de sécurité selon la revendication 8, **caractérisé par le fait que** chaque mot partiel est formé d'un mot partiel binaire de 2 bits.

10. Dispositif de commutation de sécurité selon l'une des revendications 8 ou 9, **caractérisé par le fait que** chaque bit du mot numérique est lu via une ligne de signalisation (20 - 23) à la sortie du générateur de codes (19).

11. Dispositif de commutation de sécurité selon la revendication 8, **caractérisé par le fait que** les actionneurs sont reliés au générateur de codes (19) par une ligne (17, 18) via laquelle l'état logique de l'actionneur est lu dans le générateur de codes (19), et que dans le cas d'un état logique correspondant à l'activation d'un actionneur les lignes de signalisation (20, 21 ou 22, 23) du mot partiel associé prennent les valeurs binaires 00 ou 11.

12. Dispositif de commutation de sécurité selon la revendication 11, **caractérisé par le fait que** des valeurs aléatoires binaires comprises entre 0001 et 1110 sont enregistrées dans la table de codes (32) ou dans les tables de codes (33, 34).

13. Dispositif de commutation de sécurité selon la revendication 12, **caractérisé par le fait que** le compteur (13) est formé d'un compteur modulo-8 prenant des valeurs comprises entre 0 et 7 formant les adresses.

14. Dispositif de commutation de sécurité selon l'une des revendications 1 à 13, **caractérisé par le fait que** l'unité d'évaluation (8) est un circuit redondant.

15. Dispositif de commutation de sécurité selon l'une des revendications 1 à 14, **caractérisé par le fait que** l'unité d'évaluation (8) est reliée à un système de bus (1) qui est piloté par une unité de commande (3), l'unité d'évaluation (8) écoutant en permanence les signaux transmis par le système de bus (1).

16. Dispositif de commutation de sécurité selon la revendication 15, **caractérisé par le fait que** les actionneurs sont reliés au système de bus (1) via un élément d'interface (7).

17. Dispositif de commutation de sécurité selon la revendication 16, **caractérisé par le fait que** les lignes de signalisation (20 - 23) à la sortie du générateur de codes (19) sont amenées chacune à une entrée D0-D3 d'un élément d'interface (7) pour la transmission des bits du mot numérique.

18. Dispositif de commutation de sécurité selon l'une des revendications 15 à 17, **caractérisé par le fait que** le système de bus (1) fonctionne selon le principe maître-esclave, le maître étant constitué par l'unité de commande (3).

19. Dispositif de commutation de sécurité selon l'une des revendications 4 à 18, **caractérisé par le fait qu'**en cas de coupure de l'alimentation électrique de l'équipement de travail consécutive à un défaut, ce dernier est mémorisé de manière non volatile dans l'unité d'évaluation (8), qu'avant l'établissement de l'alimentation électrique de l'équipement de travail l'interrupteur d'arrêt d'urgence est d'abord non actionné, puis actionné, puis de nouveau non actionné, et que l'établissement n'est ensuite autorisé par l'unité d'évaluation (8) que si elle enregistre dans chaque cas les valeurs appropriées des mots partiels.
